# FASCICULE DE BREVET EUROPEEN

(11) **EP 2 783 185 B1**
(45) Date de publication et mention de la délivrance du brevet: **01.02.2017**
(21) Numéro de dépôt: 12808459.7
(22) Date de dépôt: 20.11.2012
(51) Int. Cl.: G01D 4/00, H02J 3/14

(54) **PROCÉDÉ DE RÉGULATION DE LA CONSOMMATION D'ÉNERGIE EN TEMPS RÉEL D'UNE INFRASCTRUCTURE INDUSTRIELLE**
VERFAHREN ZUR STEUERUNG DES ENERGIEVERBRAUCHS EINER INDUSTRIELLEN INFRASTRUKTUR IN ECHTZEIT
METHOD OF CONTROLLING ENERGY CONSUMPTION OF AN INDUSTRIAL INFRASTRUCTURE IN REAL TIME

(30) Priorité: 22.11.2011 LU 91904
(43) Date de publication de la demande: 01.10.2014
(73) Titulaire: Leanovation SARL, 1371 Luxembourg (LU)
(72) Inventeur: RICHARD, Gaël, Wye-Ashford TN25 5DP (GB)
(74) Mandataire: Lebkiri, Alexandre
(86) Numéro de dépôt international: PCT/IB2012/002407
(87) Numéro de publication internationale: WO 2013/076550

(56) Documents cités:
- US-A- 4 370 723
- US-A- 5 462 225
- US-A1- 2008 177 423

## Description

La présente invention concerne les procédés de gestion de la consommation d'énergie en temps réel d'un site industriel. En outre l'invention concerne les procédés d'amélioration de régulation de la distribution d'énergie concernant une pluralité d'équipements d'un site industriel.

Actuellement, il existe des systèmes permettant de mesurer et de contrôler la consommation d'équipements à travers une interface utilisateur. Un tel dispositif est décrit dans la demande de brevet internationale WO9946606.

Par ailleurs, des infrastructures industrielles peuvent être gérées par des automates programmables mettant en oeuvre un processus industriel prédéfini.

La régulation de la consommation est effectuée principalement par équipement, au cas par cas. La régulation peut intégrer des consignes provenant d'un automate programmable, d'un operateur ou d'un réglage fixe.

Un inconvénient est que dans les procédés ou systèmes actuels, la régulation en consommation des équipements ne tient pas compte de la consommation d'énergie mesurée en temps réel. Notamment, lorsque des pics de consommation sont enregistrés une intervention manuelle d'un opérateur est alors requise. Une phase d'investigation est menée de manière à identifier l'équipement ayant provoqué la cause d'un pic.

L'opérateur a alors plusieurs solutions pour continuer. Notamment, il peut choisir un équipement dont il peut couper ou limiter l'alimentation de manière à ne pas provoquer à nouveau un pic. En revanche, cet équipement doit être dans des conditions nominales de fonctionnement, l'opérateur doit alors contrôler le régime de cet équipement et agir en connaissance de cause.

Un réel problème se pose lorsque des pics importants de consommation d'un ensemble d'équipements entrainent une surconsommation temporaire risquant soit d'entrainer une interruption de certains équipements, soit un surcoût important.

Enfin, un autre inconvénient peut survenir lorsque le gestionnaire des équipements n'est pas configuré pour gérer des pics importants, il s'agit de dégradations ou de dysfonctionnements d'un équipement ne pouvant répondre à cette contrainte.

Les documents de brevets suivants constituent l'état de la technique le plus proche : US 2008/177423 A1, US5462225 et US4370723. Néanmoins, ils ne permettent pas de résoudre les problèmes précités.

L'invention permet de pallier aux inconvénients précités.

L'invention a pour but un procédé de régulation qui permet de mesurer les consommations courantes des équipements d'un site industriel, ainsi que la somme des consommations de manière à identifier un pic de consommation potentiel. En outre, l'invention permet de réguler l'alimentation d'un ou plusieurs équipements ou de changer ou de limiter une ou des fonctions réalisées par un ensemble d'équipements dans la limite de plage de fonctionnement nominal des équipements. Notamment, l'invention permet d'évaluer la somme des consommations d'un ensemble d'équipements et de comparer cette somme à un seuil. Le franchissement du seuil permettant d'activer une régulation adaptée.

Un intérêt de l'invention est d'adapter la consommation selon des tranches horaires particulières ou des détections de pics de manière à anticiper une surconsommation d'un ensemble d'équipements.

Avantageusement, le procédé de régulation de la consommation d'énergie d'un premier ensemble d'équipements, le premier ensemble d'équipements comprenant un second ensemble d'une pluralité d'équipements réalisant au moins une première fonction, comprend :
- une première étape de définition de paramètres nominaux de fonctionnement d'une pluralité d'équipements à partir d'une interface de gestion, les paramètres nominaux comprenant :
   i. la définition d'au moins un premier seuil de consommation dont la valeur correspond à un paramétrage prédéfini ;
   ii. le choix d'au moins un équipement considéré comme un équipement de contrôle et le choix d'au moins un équipement considéré comme un équipement de régulation parmi le premier ensemble ;
   iii. la définition d'au moins un premier régime général du second ensemble des équipements réalisant la première fonction, le premier régime général correspondant à une configuration d'un régime de chacun des équipements ;
   iv. la définition d'au moins un second seuil dont la valeur correspond à un second paramétrage dépendant du régime de l'équipement de contrôle ;
   v. la définition d'une plage nominale pour chaque régime de chaque équipement du premier ensemble ;
- une seconde étape de mesure à des instants prédéfinis à partir de moyens de mesure de consommation auquel chaque équipement est relié :
   i. de la consommation d'au moins un équipement, dit équipement de référence, du premier ensemble ;
   ii. de la valeur d'un premier paramètre de fonctionnement de l'équipement de contrôle du premier ensemble;
- une troisième étape de traitement réalisé au moyen d'un calculateur comprenant la validation d'une première condition correspondant :
   i. à la détection d'une première valeur de la consommation d'au moins un équipement de référence franchissant le premier seuil ;
   ii. à la détection d'une valeur du premier paramètre de fonctionnement d'au moins un équipement de contrôle ne dépassant pas le second seuil, l'équipement de contrôle restant dans sa plage nominale de fonctionnement ;
- une quatrième étape d'engagement d'une régulation à partir d'un concentrateur et de moyens d'actuation, lorsque la première condition est validée, comprenant une combinaison des actions suivantes :
   i. une activation d'une consigne de diminution de l'alimentation de l'équipement de régulation ;
   ii. un basculement de l'ensemble des équipements dans un second régime général permettant de réaliser une seconde fonction, un troisième seuil de consommation d'au moins un équipement de référence dont la valeur correspond à un troisième paramétrage dépendant de la seconde fonction, le troisième seuil étant inférieur au premier seuil.

Avantageusement, le premier ensemble comprend au moins un premier équipement réalisant au moins une première tâche dans un premier intervalle de temps et au moins un second équipement réalisant une seconde tâche dans un second intervalle de temps, la combinaison des actions de la quatrième étape d'engagement d'une régulation comprenant en outre un ajustement ou non de la durée du second intervalle de temps à la durée du premier intervalle de temps de manière à ce que la première et la seconde tâches se déclenchent sensiblement en même temps et soient effectuées dans un intervalle de temps sensiblement égal.

Avantageusement, la première valeur est la somme des consommations du second ensemble d'équipements réalisant la première fonction pendant une durée prédéterminée et que le premier et le troisième paramétrage comprend la définition d'un premier seuil en fonction d'au moins un des paramètres parmi lesquels :
- une tranche horaire prédéfinie ;
- la définition d'une charge prédéfinie de production réalisée par au moins une fonction ;
- l'énergie moyenne nécessaire à réaliser la fonction pendant une durée prédéterminée ;
- le régime général de la fonction.

Avantageusement, la première valeur est la consommation de l'équipement de référence, du premier ensemble pendant une durée prédéterminée et que le premier paramétrage comprend la définition d'un premier seuil (S1i) en fonction d'au moins un des paramètres parmi lesquels :
- une tranche horaire prédéfinie ;
- la définition d'une charge prédéfinie de production réalisée par l'équipement de référence pendant une durée prédéterminée ;
- un régime donné de l'équipement de référence.

Avantageusement, le second paramétrage correspond au choix d'une valeur maximale de fonctionnement souhaitée d'un paramètre de l'équipement de contrôle, ledit équipement ayant un régime donné, parmi lesquels :
- une température mesurée en au moins un point de l'équipement ;
- une vitesse motrice mesurée en au moins un point de l'équipement ;
- la pression mesurée en au moins un point de l'équipement, ladite valeur maximale souhaitée définissant le second seuil.

Avantageusement, l'équipement de régulation est :
- soit l'équipement de contrôle ;
- soit l'équipement de référence.

Avantageusement, l'équipement de contrôle est l'équipement de référence.

Avantageusement, la valeur d'une donnée booléenne fournie par le concentrateur active la première condition.

Avantageusement, le déclenchement de la première tâche du premier équipement déclenche la seconde tâche du second équipement.

Avantageusement, le procédé comprend une première étape de contrôle de la diminution de la consommation d'au moins un équipement par au moins deux mesures à des intervalles de temps différents à partir d'un dispositif de mesure de la consommation d'un équipement permettant de vérifier que la consommation de l'équipement diminue.

Avantageusement, l'ensemble des étapes du procédé est réitéré jusqu'à ce qu'une condition d'arrêt de la régulation soit validée.

Avantageusement, une condition d'arrêt de la régulation est comprise dans l'ensemble des conditions suivantes :
- le dépassement d'un premier indicateur temporel indiquant une durée prédéterminée ;
- le dépassement d'un second indicateur temporel indiquant une heure prédéterminée;
- la consommation de l'équipement de référence est inférieure au troisième seuil ;
- la consommation de l'ensemble des équipements réalisant une fonction est inférieure au premier seuil ;
- la valeur du premier paramètre n'est pas au-delà du second seuil générant un fonctionnement de l'équipement hors de sa plage nominale de fonctionnement ;
- une opération manuelle d'un utilisateur.

Avantageusement, le procédé comprend une seconde étape de contrôle lorsque la régulation est terminée permettant de mesurer la consommation de l'ensemble des équipements et de la comparer à une valeur référence correspondant au premier régime général.

Avantageusement, lorsque la régulation est terminée, le procédé comprend une étape de contrôle de l'augmentation de la consommation d'au moins un équipement par au moins deux mesures à des intervalles de temps différents à partir d'un dispositif de mesure de la consommation d'un équipement permettant de vérifier que la consommation de l'équipement augmente.

Avantageusement, la première fonction est réitérée pendant une première période jusqu'à l'obtention d'une charge prédéfinie, une charge unitaire étant le résultat de la réalisation d'une seule exécution de la première fonction, les étapes de régulations étant agencées de manière à inhiber le basculement de la première et la seconde fonction tant que la charge prédéfinie n'est pas obtenue.

Avantageusement, un système de régulation d'un premier ensemble d'équipements pour la mise en oeuvre du procédé de l'invention comprend :
- une interface utilisateur permettant de définir un paramétrage de la première étape du procédé ;
- des moyens d'alimentation alimentant les équipements ;
- des moyens d'actuation des équipements permettant de réguler l'alimentation d'au moins un équipement ;
- une pluralité de capteurs, chaque capteur permettant au moins la mesure de la consommation de chaque équipement de l'ensemble et au moins un capteur permettant la mesure d'un paramètre de fonctionnement d'un équipement permettant de réaliser la seconde étape du procédé ;
- des moyens de mesure de consommation permettant de comparer au moins une valeur de consommation d'un équipement avec un premier seuil prédéfini et permettant de calculer la somme des consommations des équipements, les moyens de mesure de consommation permettant de comparer des niveaux de consommations et de paramètres nominaux de manière à déclencher au moins une condition permettant d'engager la quatrième étape de régulation des équipements comprenant une combinaison d'actions.

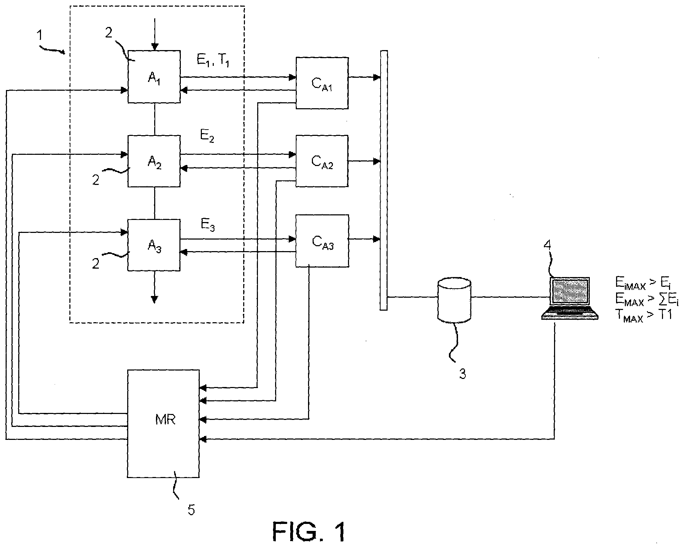

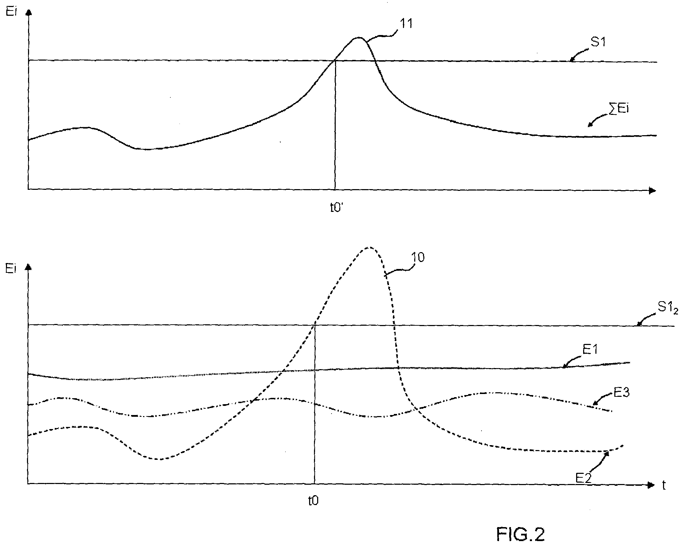

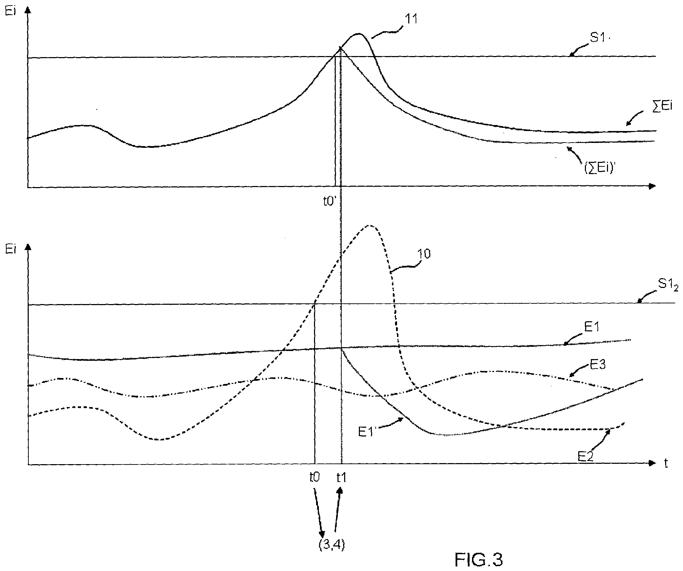

D'autres caractéristiques et avantages de l'invention seront présentés dans une description détaillée & illustrée par les figures suivantes : à l'aide de la description qui suit, faite en regard des dessins annexés qui représentent :
▪ figure 1 : un schéma de principe de l'invention ;
▪ figure 2 : deux graphiques de consommation d'équipements sur lesquels un pic de consommation apparait ;
▪ figure 3: deux graphiques de consommations d'équipements, l'alimentation d'un équipement ayant été régulée par le procédé de l'invention.

Dans la suite de la description, on nomme :
- un équipement de référence, un équipement dont le procédé de l'invention permet de mesurer sa consommation énergétique et de comparer la mesure à un seuil prédéterminé ;
- un équipement de contrôle, un équipement dont le procédé de l'invention permet de mesurer un paramètre de fonctionnement tel que la température, la pression ou la vitesse motrice d'un régime donné ou tout autre paramètre correspondant à un fonctionnement d'un équipement et de comparer la valeur du paramètre à un seuil prédéterminé ;
- un équipement de régulation, un équipement dont le procédé de l'invention permet de réguler la consommation de l'équipement par une actuation de son alimentation ou une modification de son régime entrainant une actuation de son alimentation.

La figure 1 représente un schéma de principe du procédé de l'invention.

Un site industriel 1 comprend une pluralité d'équipements 2, notés Ai, i variant de 1 à N avec N le nombre d'équipements total que l'on considère, cet ensemble est également noté ENS 1. Dans le mode de réalisation de la figure 1, seuls trois équipements A1, A2, A3 sont représentés.

On nomme « moyens de mesure de la consommation », les moyens permettant de mesurer les consommations de chaque équipement. Ces moyens comprennent un concentrateur et/ou des capteurs qui sont connectés aux équipements.

Selon l'invention, chacun des équipements Ai envoie sa consommation courante E1, E2, E3 respectivement à des capteurs C_{A1}, C_{A2}, C_{A3}, chacun des équipements étant connecté à un capteur propre permettant de mesurer au moins leur consommation et/ou certains paramètres de fonctionnement. Chaque capteur est connecté en réseau à un concentrateur 3 comprenant un calculateur permettant l'analyse des données transmises.

Ces informations sont remontées à intervalles réguliers à un concentrateur 3 permettant d'enregistrer dans une base de données les valeurs de consommations de chacun des équipements Ai.

La remontée d'informations peut être activée à des intervalles réguliers soit sur requêtes du concentrateur, soit spontanément par chacun des équipements Ai vers le concentrateur.

Les connexions entre les capteurs et le concentrateur sont dans un exemple des liaisons Ethernet.

Dans un exemple de réalisation, les connexions entre les équipements et les capteurs sont des liaisons Ethernet.

Toute autre liaison permettant l'échange de données entre un équipement et un capteur est possible, par exemple une liaison analogique.

Une interface utilisateur 4 intégrée ou pas au concentrateur permet de paramétrer le réseau et les paramètres de contrôles, les données à mesurer et à analyser ainsi que le type de consignes à générer.

Le procédé de l'invention permet de générer des consignes de pilotages des équipements, notamment de leur mode de fonctionnement, leur alimentation ainsi que leur durée de fonctionnement de manière à optimiser la consommation d'énergie des équipements.

Un module de régulation MR 5 représentée sur la figure 1 permet d'alimenter les équipements en énergie ou de contrôler la régulation d'une alimentation d'un équipement ou d'une pluralité d'équipements. L'alimentation de chaque équipement peut être pilotée à partir du concentrateur via le module de régulation lorsque des analyses de données permettent de déclencher automatiquement une action sur l'alimentation ou bien à partir de chaque capteur, qui peut également transmettre une consigne de régulation au module de régulation, lorsque ces derniers ont un calculateur permettant de générer une consigne à partir de données remontées de chaque équipement. Le concentrateur permet également de piloter par une consigne certains modes de fonctionnement de chaque équipement par exemple la vitesse moteur ou le régime moteur.

Ainsi l'invention permet une régulation locale de chaque équipement selon des critères analysés au niveau d'un capteur et/ou permet une régulation globale lorsque le concentrateur permet l'analyse les données qui lui sont remontées.

Généralement, un ensemble d'équipements, agissant collatéralement, réalise une fonction donnée.

On note dans la suite de la description, Fₖₚ une fonction dont l'indice p permet de différencier chaque fonction réalisée par un ensemble de k équipements choisis parmi l'ensemble ENS 1 des équipements A_{i∈[1, N]}.

Un indicateur de fonctionnement de l'ensemble de ces équipements peut être obtenu par la surveillance de la consommation globale des équipements de cet ensemble.

L'invention permet de mettre en oeuvre une étape de définition :
- de l'ensemble des k équipements à considérer par le concentrateur réalisant au moins une fonction Fₖ₁ donnée ou une pluralité de fonctions Fₖₚ selon des régimes différents ;
- des données à mesurer par le concentrateur provenant de chaque équipement Ai et ;
- des seuils auxquels le concentrateur compare les mesures relevées.

Par convention, on note dans la suite de la description un premier seuil S1 lorsqu'il s'agit de comparer une valeur représentant soit une valeur discrète soit une somme de consommations d'un ensemble d'équipements.

On note un premier seuil S1i lorsqu'il s'agit de comparer une valeur représentant un paramètre tel que la consommation d'un seul d'équipement Ai.

Dans un premier mode de réalisation de l'invention, le procédé permet de réaliser une régulation de consommation d'au moins un équipement indépendamment d'une fonction réalisée par un ensemble d'équipements.

Le concentrateur enregistre à un instant t chacune des consommations Ei de chaque équipement Ai. Un calculateur permet de calculer la somme des consommations ∑Ei des équipements Ai de l'ensemble considéré à des instants réguliers.

La consommation Ei d'un équipement Ai est calculée sur un intervalle de temps prédéfini qui peut être configurable à partir du concentrateur 3.

Dans une première variante du premier mode, le procédé de l'invention permet de mesurer au moins une valeur d'une consommation E1 d'un premier équipement A1, dit équipement de référence, de l'ensemble d'équipements. Les mesures peuvent être réalisées selon la configuration à intervalles réguliers et la consommation est mesurée sur une durée prédéterminée. Dans cette première variante, le calculateur intégré ou non au concentrateur permet de réaliser l'opération de comparaison de la valeur de la consommation E1 de l'équipement de référence A1 à une première valeur seuil S1₁ prédéfinie.

On note dans la suite de la description un seuil de consommation S1_{N} d'un équipement N.

La valeur du premier seuil S1₁ est définie selon un premier paramétrage P1.

Le premier paramétrage P1 permet de définir les paramètres à prendre en compte dans la définition du premier seuil S1₁, parmi ces paramètres, le procédé de l'invention permet de prendre en compte :
- la tranche horaire courante ;
- la définition d'une charge minimale de production réalisée par le premier équipement de référence A1 ;
- la consommation moyenne nécessaire au fonctionnement du premier équipement de référence A1 pendant une durée prédéterminée ;
- le régime du premier équipement de référence A1.

Le franchissement du seuil S1₁ donne une première condition.

La mesure de la consommation d'au moins un équipement de référence permet d'activer une régulation de la consommation d'un ou de plusieurs équipements. L'étape de régulation est détaillée dans la suite de la description. Les équipements dont la consommation est régulée sont appelés équipement de régulation.

Dans une seconde variante du premier mode, le procédé de l'invention permet de calculer la valeur de la somme des consommations ∑Ei d'un ensemble ENS 1 d'équipements (Ai)iε[1,n].

Dans cette seconde variante, l'invention permet de comparer la valeur de la somme des consommations ∑Ei de l'ensemble des équipements (Ai)iε[1,n] à une première valeur seuil S1 prédéfinie.

La valeur du premier seuil S1 est définie selon un premier paramétrage P1'.

Le premier paramétrage P1' permet de définir les paramètres à prendre en compte dans la définition du premier seuil S1. Parmi ces paramètres, le procédé de l'invention permet de prendre en compte :
- la tranche horaire courante ;
- la définition d'une charge minimale de production réalisée par l'ensemble ENS 1 des équipements (Ai)iε[1,n] ;
- la consommation moyenne nécessaire au fonctionnement de l'ensemble ENS 1 des équipements (Ai)iε[1,n] pendant une durée prédéterminée ;
- un régime général de fonctionnement comprenant un régime donné de chaque équipement.

Un avantage de cette variante est que l'évolution de la somme des consommations de l'ensemble ENS 1 des équipements permet d'obtenir une donnée critique au bon fonctionnement des équipements.

En effet, la somme des consommations de l'ensemble ENS 1 des équipements ne doit pas dépasser une certaine limite pour éviter d'endommager la chaine des équipements en fonctionnement ou encore de nuire au bon déroulement de la réalisation de la fonction en cours ou encore de dépasser la consommation nominale entrainant un surcout de consommation.

Le franchissement du seuil S1 donne une première condition.

De ce fait, la mesure de la somme des équipements permet de contrôler une donnée critique.

La mesure de la consommation d'un ensemble ENS 1 d'équipements permet d'activer une régulation de la consommation d'un ou de plusieurs équipements. Les équipements dont la consommation sont régulées sont appelées équipements de régulation. L'étape de régulation est détaillée dans la suite de la description.

Les deux variantes de réalisations du premier mode de réalisation de l'invention peuvent être combinées de manière à contrôler la consommation d'un équipement de référence et la consommation d'un ensemble ENS 1 d'équipements. Ce dernier cas est détaillé par la suite aux figures 2 et 3. Ce double contrôle permet un gain de sécurité et une validation de la surconsommation détectée.

En outre, ce double contrôle permet également d'agir plus efficacement sur la réalisation d'une première régulation adaptée d'un équipement de régulation et d'une seconde régulation de l'ensemble ENS 1 des équipements réalisées simultanément. La première et la seconde régulation peuvent être combinées ou non selon la configuration souhaitée.

Dans ce cas, la définition de deux seuils S1, S1₁ permettent de comparer deux valeurs de consommations.

Dans un premier mode, le franchissement du seuil S1 et le franchissement du seuil S1₁ donne une première condition.

Dans un second mode, le franchissement du seuil S1 ou le franchissement du seuil S1₁ donne une première condition.

Un avantage est de permettre la mesure d'un pic de consommation propre à un seul équipement de référence en plus de la détection opérée sur la consommation d'un ensemble ENS 1 d'équipements. Les pics de consommations détectés peuvent être locaux selon la surconsommation d'un équipement ou globaux selon un ensemble d'équipements.

Dans une troisième variante du premier mode de réalisation de l'invention, le calculateur permet de comparer la consommation Ei d'une pluralité d'équipements de référence pris séparément, de manière à effectuer un contrôle d'une pluralité d'équipements en vu d'activer une régulation appropriée d'équipements de régulation.

L'avantage de ce mode de réalisation est d'adapter la régulation de la consommation en considérant les équipements les plus consommateurs ou ceux qui provoquent des pics locaux de consommation.

Dans ce cas les équipements de référence peuvent être avantageusement configurés de manière à être les équipements de régulation.

Un avantage est de ne pas diminuer la consommation de tous les équipements dès lors qu'un seul pic de consommation est détecté, mais uniquement de un ou quelques équipements de régulation qui permettent un retour à une consommation de l'ensemble des équipements sous un seuil prédéterminé.

Le concentrateur peut alors réguler l'alimentation de un ou plusieurs équipements de régulation en fonction des valeurs de consommations de certains équipements dépassant un seuil prédéterminé. Cette solution permet une grande flexibilité sur la stratégie de régulation à adopter selon les dépassements de seuils constatés pendant leur fonctionnement des équipements.

Dans une quatrième variante, aucune valeur de consommation d'équipement de référence n'est comparée à un seuil. Une première valeur discrète telle qu'une valeur booléenne fournie au concentrateur est comparée à un premier seuil S1 prédéfini.

Dans cette quatrième variante de réalisation, la valeur booléenne de régulation peut avantageusement être générée automatiquement selon un plan de production prédéfini ou selon une tranche horaire définissant le régime des équipements.

Dans un second mode de réalisation de l'invention, le procédé permet de réaliser une régulation de consommation d'un ensemble ENS 1 k de k équipements réalisant au moins une fonction F1 k. L'ensemble des équipements réalisant cette fonction est appelé premier ensemble ENS 1 k, ENS 1 k est un ensemble compris dans l'ensemble ENS 1.

La fonction F1k selon la configuration est paramétrée de manière à correspondre à un premier régime général RG1k de fonctionnement qui correspond à une pluralité de régimes prédéterminés de chaque équipement contribuant à réaliser la fonction F1 k.

Ainsi, le premier ensemble d'équipements ENS 1 k réalise une première fonction F1k selon un premier régime général RG1k.

Le procédé de l'invention permet de considérer la consommation du premier ensemble ENS 1 k d'équipements réalisant la fonction F1 k selon un premier régime général RG1k.

Comme dans le premier mode de réalisation, les consommations mesurées sont intégrées sur une durée prédéterminée.

Selon les mêmes notations que précédemment, la somme des consommations (∑Ei)k permettant d'assurer la réalisation de la fonction F1k pendant un laps de temps prédéterminé est également notée dans ce mode de réalisation E_{F1k}. Il s'agit de la consommation nécessaire à l'exécution de la fonction F1 k pendant un laps de temps prédéterminé.

Dans le cas où les équipements du premier ensemble ENS1k peuvent réaliser une pluralité de fonctions (Fik)i∈[1, N'] associées à une pluralité de régimes généraux (RGik) i∈[1, N'], le procédé de l'invention permet de réguler la puissance consommée par le premier ensemble ENS1 k en basculant la configuration des équipements {(Ai)_{iε[1, N]}}k de manière à réaliser une seconde fonction F2k moins consommatrice.

Dans un exemple de réalisation, on considère l'exemple d'une première fonction F1k permettant de fabriquer des grands bacs en plastique à partir d'une pluralité d'équipements {(Ai)iε[1, N]}k tels qu'un four, une souffleuse, un compresseur et un refroidisseur. La consommation de F1 k dans le régime général RG1 k est E_{F1k}.

Une seconde fonction F2k permet de fabriquer des petits bacs en plastique à partir des mêmes équipements mais configurés dans un régime RG2k. La consommation de F2k dans le régime général RG2k est E _{F2k}, avec E F₂ₖ < E _{F1k}.

Le procédé de l'invention permet de modifier la configuration des équipements du premier ensemble d'équipements ENS1k de manière à basculer l'exécution d'une première fonction F1k à l'exécution d'une seconde fonction F2k moins consommatrice. Le procédé de l'invention permet d'activer la modification de la configuration des équipements lors de la détection de pics de consommation ou selon des tranches horaires prédéfinies ou encore selon une donnée booléenne donnée par un compteur.

Dans ce second mode de réalisation, un premier paramétrage P1 permet de définir un premier seuil S1 dépendant de la première fonction F1k et un troisième seuil S3 dépendant de la seconde fonction F2k.

D'une manière générale, un paramétrage de seuils peut être réalisé de manière à faire correspondre autant de seuils que de fonctions prédéfinies pouvant être exécutées par les équipements du premier ensemble ENS 1 k.

Dans ce second mode de réalisation, le premier paramétrage P1 comprend la définition d'un premier seuil S1 et d'un troisième seuil S3 lorsqu'une seconde fonction est définie. La définition des seuils S1 et S3 sont définis en fonction de paramètres parmi lesquels :
- la tranche horaire courante ;
- la définition d'une charge minimale de production réalisée par la fonction F1 k et/ou F2k ;
- la consommation moyenne nécessaire à réaliser les fonctions F1k et/ou F2k pendant une durée prédéterminée ;
- le régime général de chaque fonction RG1 k et/ou RG2k.

Dans les deux précédents modes de réalisations, l'invention permet, en outre, de définir un paramètre de fonctionnement d'un équipement Ac prédéfini, appelé équipement de contrôle. L'invention permet alors de contrôler ce paramètre de fonctionnement de manière à vérifier que le dit équipement est dans une plage de valeur acceptable de fonctionnement.

Par exemple il peut s'agir d'un contrôle d'une température en un point particulier de l'équipement, d'une pression en un point ou d'une vitesse motrice d'une composante motrice de l'équipement. Des capteurs sont utilisés à cette fin et positionnés dans les points de contrôles du ou des équipement(s) de contrôle.

Une combinaison des précédents paramètres peut être contrôlée.

On note alors que l'équipement de contrôle Ac est dans sa plage de fonctionnement nominale lorsque les paramètres mesurés sont dans une plage prédéterminée de valeurs signifiant un fonctionnement normal de l'équipement de contrôle Ac dans un régime donné.

L'invention permet de mesurer à intervalles réguliers ou des intervalles choisis selon un plan de contrôle d'un opérateur, les valeurs d'au moins un paramètre de fonctionnement de l'équipement de contrôle Ac. Le relevé des valeurs du paramètre de fonctionnement permet de comparer cette valeur à une seconde valeur seuil S2.

Un avantage du choix d'un équipement de contrôle Ac est de s'assurer qu'un ensemble prédéterminé d'équipements (Ai))_{i∈[1, N]} fonctionne a priori dans un mode de fonctionnement normal. L'invention permet donc de contrôler le fonctionnement d'un équipement dans sa plage de valeurs acceptables avant de déclencher la régulation d'un ou de plusieurs équipements de régulation ou de suspendre une régulation déjà engagée d'un ou plusieurs équipements.

Dans une première variante de réalisation, le procédé de l'invention permet de choisir un équipement de contrôle Ac considéré comme un équipement pouvant être régulé de manière à réduire la consommation pendant une durée prédéterminée. Cette première variante est adaptée au premier mode de réalisation de l'invention.

Ainsi, lors de pics de consommation identifiés, le procédé de l'invention permet d'ajuster la consommation des équipements par la régulation d'un équipement. L'équipement de contrôle est alors appelé équipement de régulation. Cette solution présente l'avantage de directement contrôler le fonctionnement d'un équipement régulé.

In fine, l'alimentation d'un d'équipement est régulée de manière à palier à une augmentation anormale de la consommation d'un ensemble d'équipements Ai de l'ensemble ENS 1.

Dans une seconde variante de réalisation, le procédé de l'invention permet de choisir un équipement de contrôle Ac considéré comme critique pour le contrôle des paramètres de fonctionnement. Ainsi si l'équipement le plus critique est dans un régime nominal, le déclenchement d'une étape de régulation peut être effectué en réduisant la consommation d'un ensemble d'équipements, réalisant une première fonction F1k, par la réalisation d'une seconde fonction F2k moins consommatrice. Cette seconde variante de réalisation est adaptée au second mode de réalisation de l'invention. Un avantage de cette solution est de réduire les contrôles au contrôle d'un seul équipement par exemple considéré comme critique pour basculer d'une fonction à une autre fonction moins consommatrice.

Dans une variante, le procédé de l'invention permet de configurer plusieurs équipements de contrôle de manière à vérifier le bon fonctionnement d'une pluralité d'équipements critiques avant d'engager une régulation.

Selon une troisième variante, le procédé de l'invention permet de mesurer et surveiller une consommation particulière propre à un équipement de référence A1 prédéfini du premier ensemble au regard d'un premier seuil S1₁ prédéfini. Le procédé de l'invention permet alors de réguler l'alimentation d'un second équipement A2, dit de régulation. L'équipement de référence peut être configuré pour être un équipement de régulation également.

L'invention permet de définir une étape de configuration permettant la définition d'un ensemble d'équipements de régulation qui peuvent être indépendamment régulés les uns des autres selon la valeur d'au moins un paramètre de fonctionnement d'un équipement de contrôle.

L'invention permet de réguler l'alimentation de l'équipement d'au moins un équipement de régulation.

De manière à ne pas perturber le système, une mesure d'un paramètre de l'équipement de contrôle permet :
- d'une part de contrôler que ce dernier est dans un régime de fonctionnement nominal avant d'engager une régulation et qu'une régulation de l'équipement de régulation n'entrainera pas une détérioration de cet équipement ;
- d'autre part de surveiller pendant la régulation de l'équipement de régulation que le mode de fonctionnement de l'équipement de contrôle est maintenu dans des limites acceptables.

Ainsi l'invention permet de mesurer selon différents modes de réalisation, des paramètres de différentes natures selon la détermination des équipements de contrôle, de référence et de régulation choisie.

Un premier exemple de réalisation est d'enregistrer, mesurer et comparer la température d'un équipement de contrôle.

Un second exemple de réalisation est de considérer la pression, d'un équipement de contrôle ou encore sa vitesse moteur.

Selon le paramètre représentatif de la criticité de l'équipement en fonctionnement et selon son régime, l'un des paramètres peut être prédéfini selon le procédé de l'invention.

En outre une variante permet d'enregistrer, mesurer et comparer plusieurs paramètres de différentes natures et provenant du même équipement ou d'une pluralité d'équipements de contrôle.

Par exemple, le concentrateur peut mesurer et comparer une pluralité de paramètres à des valeurs seuils prédéfinies, tels que par exemple la température et la pression d'un seul et même équipement de contrôle.

Selon la configuration du concentrateur, chaque équipement envoie au concentrateur ou au capteur associé à l'équipement sa consommation courante intégrée sur une durée prédéterminée. Les envois sont effectués à intervalles réguliers. Le régime de chaque équipement peut être également contrôlé soit par requête du concentrateur soit par un envoi spontané de chaque équipement Ai.

Le concentrateur 3, 4 ou encore les capteurs reliés à chaque équipement permettent de vérifier et de contrôler que les valeurs de ces paramètres restent dans des plages de valeurs acceptables. Ces contrôles permettent de garantir que, pendant le délestage ou la régulation d'un ou plusieurs équipements de régulation, ces derniers se maintiennent dans des conditions de fonctionnement acceptables n'entrainant aucune dégradation. Dans ce dernier cas les équipements de contrôle sont choisis pour être configurés en équipement de régulation.

La figure 1 représente le cas où le concentrateur 3, 4 permet de comparer les valeurs de chaque consommation Ei de chaque équipement Ai à une valeur seuil S1i de référence prédéfinie selon un régime de fonctionnement Ri prédéterminé.

Par ailleurs, selon le procédé de l'invention, le concentrateur 3, 4 effectue la surveillance de la valeur de la somme des consommations ∑Ei de l'ensemble ENS1 d'équipements Ai.

Enfin, le concentrateur 3, 4 effectue le contrôle de la température T1 de l'équipement de contrôle Ac.

Comme précisé précédemment, dans d'autres modes de réalisation, le concentrateur 3, 4 peut surveiller les consommations de plusieurs équipements de référence.

La figure 2 représente les courbes de consommations mesurées dans le temps par le concentrateur 3, 4.

Selon les notations de la figure 1, la figure 2 reprend les mêmes notations, soient: E1 est la consommation de l'équipement A1, E2 est la consommation de l'équipement A2, E3 est la consommation de l'équipement A3.

La figure 2 représente un cas de réalisation correspondant au premier mode de l'invention dans lequel la première et la seconde variante sont combinées. Dans ce cas, la mesure d'une consommation E2 d'un équipement A2 de référence est contrôlée ainsi que la somme ∑Ei des consommations de chaque équipement Ai. Dans ce cas de réalisation l'équipement de contrôle est le premier équipement A1, Dans cet exemple, l'équipement A1 est choisi comme l'équipement de régulation.

On note la première configuration suivante :
- Equipement de référence : A2 ;
- Mesure et comparaison de la consommation E2 de l'équipement A2 par rapport à un seuil S1₂ ;
- Mesure et comparaison de la consommation de la somme des consommations ∑Ei de l'ensemble des équipements (Ai)iε[1, n] par rapport à un premier seuil S1 ;
- Equipement de contrôle : A1 ;
- Paramètre de contrôle : la température T ;
- Equipement de régulation : A1.

Le premier graphique représente l'évolution de la somme ∑Ei des consommations de chaque équipement. Le second graphique représente l'évolution des consommations Ei de chaque équipement.

Lors de la surveillance des consommations Ei des équipements Ai, un premier pic 10 de consommation est détecté à l'instant t0. Le pic 10 de consommation correspond à une surconsommation de l'équipement A2.

Cette étape permet d'identifier l'équipement en surconsommation et permet également de mesurer la criticité d'une telle surconsommation.

Dans le cas où l'équipement fournissant un pic de consommation est prédéterminé comme critique dans la réalisation d'une fonction réalisée par un ensemble d'équipements de l'ensemble ENS 1 (Ai)iε[1, N] ou qu'un danger potentiel est identifié préalablement lorsque la consommation de cet équipement dépasse une certaine limite, alors la régulation d'un équipement de régulation A1 permettra de maintenir le système formé de l'ensemble des équipements dans des conditions de fonctionnement acceptables.

La consommation de l'équipement A2 dépasse une valeur seuil S1₂ prédéfinie pour un régime donnée à un instant t0.

A un instant t0', le concentrateur 3, 4 détecte un second pic 11 correspondant à une surconsommation de la somme ∑Ei des consommations de chaque équipement Ai dépassant un premier seuil S1.

L'invention permet, suite à la détection des pics 10 et 11 de consommation, de réguler la consommation de l'équipement de régulation A1.

Le temps de prise de décision permet de renvoyer une consigne de régulation d'alimentation ou d'arrêt de l'équipement au système et notamment à l'équipement A1 de régulation.

Ce temps de prise de décision par le concentrateur 3, 4 correspond au temps pendant lequel la donnée est envoyée au concentrateur ou au temps nécessaire à la lecture de la dernière valeur enregistrée, au temps de mesure et de comparaison, ainsi qu'au temps nécessaire à la génération d'une consigne adéquate de régulation.

Parallèlement, à la mesure et à la comparaison des consommations des équipements, le procédé de l'invention permet de prendre en considération le temps nécessaire à la mesure et la comparaison d'un paramètre de fonctionnement, tel que la température, de l'équipement de régulation A1.

Le procédé de l'invention permet d'effectuer une étape de contrôle en effectuant la mesure d'au moins un paramètre de fonctionnement d'un équipement de contrôle, tel que la température prélevée en un point de l'équipement de contrôle à partir d'un capteur par exemple. Dans cet exemple de réalisation, l'équipement de contrôle A1 est également l'équipement de régulation, c'est-à-dire l'équipement dont l'alimentation peut être régulée par le concentrateur. L'évolution du paramètre de fonctionnement n'est pas représentée sur les figures 2 et 3.

La valeur du paramètre de fonctionnement est comparée à un second seuil S2 permettant de valider que l'équipement de contrôle fonctionne bien dans sa plage de valeur acceptable.

Le procédé de l'invention permet de réguler, soit de réduire, l'alimentation de l'équipement de régulation A1. La diminution est une régulation adaptée de manière à ce que l'équipement A1 de régulation puisse continuer à fonctionner dans des conditions normales de fonctionnement tout en consommant moins d'énergie. Les conditions normales de fonctionnement sont prédéfinies par une plage de valeur de paramètres tels que la température, la pression ou la vitesse moteur pour un régime donné.

La régulation de l'alimentation de l'équipement de régulation A1 peut être engagée tant qu'il reste dans sa plage de fonctionnement.

Le procédé de régulation peut donc être réitéré tant que la valeur du paramètre de fonctionnement reste dans une plage de valeurs prédéfinie pour un régime donné.

La figure 3 représente alors l'influence d'une telle action de régulation de l'équipement de régulation A1 entreprise par le concentrateur 3, 4. Une baisse de l'alimentation de A1 a pour conséquence une diminution de sa consommation E1' à partir de l'instant t1.

Cette baisse de consommation a pour conséquence une diminution de la somme des consommations de l'ensemble ENS 1 des équipements. Cette diminution est représentée sur la courbe du haut représentant la somme des consommations (∑Ei)'.

Un avantage de l'invention est de garantir après la détection d'au moins un pic de consommation 10, 11, qu'une régulation de l'alimentation d'un équipement de régulation non critique permet de contrôler la consommation générale de l'ensemble ENS 1 des équipements.

Dans des variantes de réalisations, le paramètre de fonctionnement, telles que la température, la pression ou la vitesse moteur d'un équipement de contrôle, peuvent être comparé à un second seuil maximal S2_{MAX} et un seuil minimal S2_{MIN}.

Dans d'autres exemples de réalisations, les configurations suivantes peuvent être réalisées à partir du procédé de l'invention :
Une seconde configuration :
   - Equipement de référence : A2 ;
   - Mesure et comparaison de la consommation E2 de l'équipement A2 par rapport à un seuil S1₂ ;
   - Equipement de contrôle : A1 ;
   - Paramètre de contrôle : la pression P ;
   - Equipement de régulation : A3.

Dans ce cas, l'équipement de contrôle A1 n'est pas le même équipement que celui de régulation. Un avantage de ce mode de réalisation est de pouvoir réguler un équipement A3 ayant une grande marge d'influence sur la consommation globale ; par exemple lorsque l'équipement est très consommateur en énergie. Cette régulation peut également être avantageuse lorsque la diminution de consommation d'un équipement n'est pas critique pour le fonctionnement général. Cette régulation peut être engagée tout en assurant la criticité d'un équipement de contrôle quant à un paramètre de pression P par exemple. Un autre avantage est que l'équipement régulé A3 ne nécessite pas la mesure d'un paramètre de contrôle.

Dans une autre variante, l'équipement A1 peut être configuré pour être également un équipement de régulation. Dans ce dernier cas, une action de régulation sur les équipements A1 et A3 permet de faire diminuer la surconsommation globale liée à l'équipement A2 tout en maitrisant la criticité de l'équipement A1.

Une troisième configuration :
- Mesure et comparaison de la somme des consommations ∑Ei de l'ensemble des équipements (Ai)iε[1, n] par rapport à un seuil S1 ;
- Equipement de contrôle : A1 ;
- Paramètre de contrôle : la pression P ;
- Equipement de régulation : A1.

Cette troisième configuration permet de contrôler la consommation de la somme des équipements tout en contrôlant un paramètre de fonctionnement, ici la pression d'un équipement A1. Cette configuration comporte l'avantage de directement réguler l'équipement de contrôle de manière à assurer son fonctionnement dans une plage de valeur acceptable tout en diminuant sa consommation.

Une quatrième configuration :
- Mesure et comparaison de la somme des consommations E_{F1k} de l'ensemble de k équipements {(Ai)iε[1, N]}k réalisant la fonction F1k par rapport à un seuil S1
- Equipement de contrôle : A1
- Paramètre de contrôle : la pression P
- Equipements de régulation : {(Ai)iε[1, N]}k par basculement d'une fonction réalisée par k équipements.

Cette quatrième configuration permet de contrôler la consommation de la somme des équipements réalisant une première fonction F1 k tout en contrôlant un paramètre de fonctionnement, ici la pression d'un équipement A1. Cette configuration comporte l'avantage de réguler un ensemble d'équipements réalisant initialement une fonction F1 k et basculant sur l'exécution d'une seconde fonction F2k moins consommatrice. Cette solution assure une régulation tout en maintenant un contrôle du paramètre de fonctionnement, par exemple la pression, de l'équipement de contrôle A1 selon le nouveau régime général de F2k.

Ainsi, la régulation par basculement de fonctions permet d'adapter un premier régime général d'un ensemble d'équipements à un second régime général permettant de réagir et d'adapter le fonctionnement d'un ensemble d'équipements à un pic de consommation détecté.

Une cinquième configuration :
- Comparaison d'un indicateur booléen du concentrateur à une valeur seuil S1 ;
- Equipement de contrôle : A1 ;
- Paramètre de contrôle : la pression P ;
- Equipements de régulation: {(Ai)iε[1, N]}k par basculement d'une fonction réalisée par k équipements.

Cette cinquième configuration permet de comparer une valeur booléenne, appelé indicateur booléen, du concentrateur à une première valeur seuil S1 de manière à réguler une pluralité d'équipements par le basculement d'un ensemble d'équipements sur la réalisation d'une fonction moins consommatrice.

Un avantage est que la valeur booléenne peut être générée par un compteur électrique et traité par le concentrateur. Ce qui permet d'organiser la planification de tâches, la prise en compte d'un évènement externe préemptant une action en cours ou de régulations de consommation.

Typiquement, le procédé de l'invention permet de basculer d'une première fonction à une seconde fonction moins consommatrice par un simple indicateur généré par un compteur et prise en compte par le concentrateur.

Le procédé de l'invention permet d'effectuer d'autres configurations issues de combinaison des précédentes configurations de manière à réguler la consommation d'équipements.

Enfin, un mode de réalisation du procédé de l'invention permet de réguler la consommation de l'ensemble des équipements en ajustant la période de fonctionnement d'un équipement sur le fonctionnement d'un autre équipement.

Typiquement, ce cas se présente lorsqu'un équipement a pour fonction d'assurer le bon fonctionnement d'un autre équipement.

Par exemple, un radiateur ou équipement de refroidissement d'un autre équipement. Pour diminuer la consommation de l'ensemble des équipements afin de réduire les pics de surconsommation, le procédé permet de déclencher un ventilateur permettant le refroidissement d'un équipement produisant de la chaleur uniquement au moment où ce dernier réalise une fonction donnée dans son cycle de fonctionnement.

Le premier ensemble comprend donc au moins un équipement noté Aₐ réalisant au moins une première tâche dans un premier intervalle de temps et au moins un second équipement noté A_{b} réalisant une seconde tâche dans un second intervalle de temps.

Le procédé de régulation permet donc d'ajuster la durée du second intervalle de temps à la durée du premier intervalle de temps de manière à ce que les deux tâches se déclenchent sensiblement en même temps et soient effectuées dans un intervalle de temps sensiblement égal.

Dans ce dernier mode de réalisation, l'étape d'engagement d'une régulation à partir du concentrateur comprend une combinaison des actions suivantes :
- une diminution ou un maintien de l'alimentation d'au moins un équipement de régulation ;
- un basculement ou non de l'ensemble ENS1k de k équipements {(Ai)iε[1, N]}k dans un second régime général RG2k permettant de réaliser une seconde fonction F2k, un troisième seuil S3 dont la valeur correspond à un troisième paramétrage P3 dépendant de la seconde fonction F2k, le troisième seuil S3 étant inférieur au second seuil S2.
- un ajustement de la durée du second intervalle de temps à la durée du premier intervalle de temps de manière à ce que les deux tâches des deux équipements Aₐ et A_{b} se déclenchent sensiblement en même temps et soient effectuées dans un intervalle de temps sensiblement égal.

Un avantage de ce dernier mode de réalisation est de réguler des équipements dynamiquement selon les pics de consommations détectés de chaque équipement ou de la somme des équipements.

Le concentrateur et les capteurs de chaque équipement peuvent comprendre une planification et des règles de priorités permettant d'engager un type de régulation préférentiel selon les paramètres courants notamment de l'heure, de la charge de production réalisée, de la consommation des équipements.

Le procédé de l'invention peut comprendre avantageusement dans un mode de réalisation des moyens de contrôle permettant de mesurer si une régulation est en cours ou qu'elle a bien eu lieu. En outre, le procédé comprend également des moyens permettant de vérifier que le retour à la normale après la régulation est bien effectif.

Notamment, dans ce mode de réalisation, le procédé comprend une première étape de contrôle de la diminution de la consommation d'au moins un équipement par au moins deux mesures à des intervalles de temps différents à partir d'un dispositif de mesure de la consommation d'un équipement permettant de vérifier que la consommation de l'équipement diminue.

Dans un mode de réalisation complémentaire ou différent, le procédé comprend une seconde étape de contrôle lorsque la régulation est terminée permettant de mesurer la consommation de l'ensemble des équipements et de la comparer à une valeur référence correspondant au premier régime général.

Enfin, généralement l'invention permet la réitération des fonctions de l'ensemble des équipements dans tous les précédents modes. Dans ce cas, la première fonction est réitérée pendant une première période jusqu'à l'obtention d'une charge prédéfinie, une charge unitaire étant le résultat de la réalisation d'une seule exécution de la première fonction, les étapes de régulation étant agencées de manière à inhiber le basculement de la première et la seconde fonction tant que la charge prédéfinie n'est pas obtenue.

L'invention concerne également, un système de régulation d'un premier ensemble d'équipements pour la mise en oeuvre du procédé de l'invention. Le système comprend :
- une interface utilisateur permettant de définir un paramétrage, notamment de la définition des seuils et des niveaux de puissance ou d'alimentation de chaque équipement, des régimes de chaque équipement et du régime général, du choix des fonctions réalisées par un ensemble d'équipements et/ou des basculements de fonctions, de la charge souhaitée pour une fonction donnée pendant une durée déterminée ;
- une pluralité de capteurs, chaque capteur permettant au moins la mesure de la consommation de chaque équipement de l'ensemble et/ou au moins un capteur permettant la mesure d'un paramètre de fonctionnement d'un équipement de contrôle, telle que la température, la pression, la vitesse moteur ;
- un concentrateur permettant de comparer au moins une valeur de consommation d'un équipement de référence avec un premier seuil prédéfini et permettant de calculer la somme des consommations des équipements, le concentrateur permettant de comparer des niveaux de consommations et/ou de paramètres nominaux de manière à déclencher au moins une condition permettant d'engager l'étape de régulation d'au moins un équipement de régulation comprenant une combinaison d'actions telles que définies précédemment ;
- des moyens pour alimenter les équipements ;
- des moyens d'actuation des équipements.

Le concentrateur et les capteurs, selon les modes de réalisation, déclenchent des moyens d'actuation permettant d'agir par exemple sur l'alimentation de chaque équipement de régulation ou de changer le mode de fonctionnement de chaque équipement notamment de leur régime de fonctionnement de manière à basculer d'une première fonction à une seconde fonction moins consommatrice.

Dans un mode de réalisation, les consommations sont relevées à partir d'un compteur dit « évolué » tel qu'un Smart Grid. On précise que le Smart Grid est une des dénominations d'un réseau de distribution d'électricité « intelligent » connu de l'homme du métier.

Par exemple, un délai de contrôle des consommations des équipements et des paramètres de contrôles peut-être de 10 min.

Notamment, dans un mode de réalisation, la puissance consommée par un équipement est intégrée sur un laps de temps, donnant son énergie moyenne. Ainsi, l'invention permet de contrôler l'énergie moyenne d'équipements dans un intervalle de temps prédéfini, par exemple de 10min.

La mise en oeuvre du procédé de l'invention peut être réalisée à partir d'un dispositif de gestion et de traitement de données provenant par exemple d'un compteur évolué et/ou des équipements, un dispositif de calcul et de transmission, un dispositif de décision et de liaison avec le réseau d'équipements et la base de données du concentrateur et encore un dispositif de capteurs intelligents de commande et d'actuation de l'alimentation d'un ou plusieurs équipements connectés au réseau.

Enfin lors de l'étape de définition des paramètres, des seuils et des régimes de fonctionnements de l'ensemble ENS1 des équipements, une fonction Pt dite de process industriel peut être définie.

Dans un exemple de réalisation, on nomme :
- S1 : le seuil maximal de consommation de l'ensemble des équipements (Aj)_{j∈[1, N]} ;
- S2iₘₐₓ : le seuil maximal de la valeur d'un paramètre de fonctionnement d'un équipement Ai ;
- S2iₘᵢₙ : le seuil minimal de la valeur d'un paramètre de fonctionnement d'un équipement Ai ;
- S1j : le seuil maximal de consommation d'un équipement Aj ou d'une pluralité d'équipements (Aj)_{j∈[1, N]} critique(s) de l'ensemble ENS 1 ;
- Ri : le régime identifié d'un équipement Ai ;
- RG1 : le régime général de l'ensemble des équipements
- DT : l'intervalle de temps dans lequel la consommation est intégrée.
- T : la tranche horaire courante ;
- F1k : une première fonction réalisée par un second ensemble ENS 1 k d'équipements, le second ensemble ENS 1 k étant compris dans l'ensemble ENS 1 ;
- F2k : une seconde fonction réalisée par le même ensemble ENS 1 k d'équipements mais moins consommatrice énergétiquement que la première fonction.

Dans une variante de réalisation, la fonction F2k est réalisée par un troisième ensemble d'équipements ENS 3 compris dans le second ensemble ENS 1 k.

Alors Pt est une fonction f de l'ensemble de ces données de configuration.
Soit Pt=f(DT, S1, S2iₘₐₓ, S2iₘᵢₙ, S1j, Ri, RG1, T, F1k, F2k).

L'invention comporte de nombreux avantages, notamment :
- la réduction du coût énergétique d'un système industriel comprenant une pluralité d'équipements ;
- l'optimisation d'une chaine de fonctionnement d'une pluralité d'équipements tout en garantissant leur bon fonctionnement ;
- l'identification des comportements sporadiques de surconsommations d'équipements entrainant une surconsommation d'une pluralité d'équipements fonctionnant collatéralement ;
- un contrôle en temps réel de la qualité et de du volume de production.

## Revendications

1. Procédé de régulation de la consommation d'énergie d'un premier ensemble (ENS1) d'équipements (Ai), le premier ensemble d'équipements (ENS1) comprenant un second ensemble (ENS1k) d'une pluralité (k) d'équipements réalisant au moins une première fonction (F1 k), **caractérisé en ce qu'**il comprend :
• une première étape de définition de paramètres nominaux de fonctionnement d'une pluralité d'équipements (Ai)_{iε[1, N]} à partir d'une interface de gestion, les paramètres nominaux comprenant :
i. la définition d'au moins un premier seuil (S1_{RG1}, S1 i) de consommation dont la valeur correspond à un paramétrage prédéfini (P1, P1i) ;
ii. le choix d'au moins un équipement considéré comme un équipement de contrôle (Ac) et le choix d'au moins un équipement considéré comme un équipement de régulation (Ar) parmi le premier ensemble (ENS1) ;
iii. la définition d'au moins un premier régime général (RG1 k) du second ensemble des équipements (ENS1 k) réalisant la première fonction (F1 k), le premier régime général (RG1k) correspondant à une configuration d'un régime de chacun des équipements (Ai) ;
iv. la définition d'au moins un second seuil (S2) dont la valeur correspond à un second paramétrage (P2) dépendant du régime de l'équipement de contrôle (Ac)
v. la définition d'une plage nominale pour chaque régime de chaque équipement (Ai)_{iε[1, N]} du premier ensemble ;
• une seconde étape de mesure à des instants prédéfinis à partir de moyens de mesure de consommation auquel chaque équipement est relié :
i. de la consommation (Eq) d'au moins un équipement (Aq), dit équipement de référence, du premier ensemble (ENS1) ;et
ii. de la valeur d'un premier paramètre (Prj, Tj, Vj) de fonctionnement de l'équipement de contrôle (Ac) du premier ensemble (ENS1) ;
• une troisième étape de traitement réalisé au moyen d'un calculateur comprenant la validation d'une première condition correspondant à la détection :
i. d'une première valeur (V1) de la consommation d'au moins un équipement de référence (Aq) franchissant le premier seuil (S1, S1i) ; et
ii. d'une valeur du premier paramètre (P1, T1, V1) de fonctionnement d'au moins un équipement de contrôle (Ac) ne dépassant pas le second seuil (S2), l'équipement de contrôle restant ainsi dans sa plage nominale de fonctionnement ;
• une quatrième étape d'engagement d'une régulation à partir d'un concentrateur et de moyens d'actuation, lorsque la première condition est validée, comprenant une combinaison des actions suivantes :
i. une activation d'une consigne de diminution de l'alimentation de l'équipement de régulation (Ar) ;
ii. un basculement de l'ensemble (ENS1 k) des équipements (Ai) dans un second régime général (RG2k) permettant de réaliser une seconde fonction (F2k), un troisième seuil (S3i, S1_{RG2}) de consommation d'au moins un équipement de référence dont la valeur correspond à un troisième paramétrage (P3) dépendant de la seconde fonction (F2k), le troisième seuil (S1_{RG2}) étant inférieur au premier seuil (S1_{RG1}).

2. Procédé selon la revendication 1, **caractérisé en ce que** les moyens de mesures de consommation comprennent le concentrateur et une pluralité de capteurs, chaque capteur étant connecté à un équipement.

3. Procédé de régulation selon l'une quelconque des revendications 1 à 2, **caractérisé en ce que** le premier ensemble comprend au moins un premier équipement (Aa) réalisant au moins une première tâche dans un premier intervalle de temps et au moins un second équipement (Ab) réalisant une seconde tâche dans un second intervalle de temps, la combinaison des actions de la quatrième étape d'engagement d'une régulation comprenant en outre un ajustement ou non de la durée du second intervalle de temps à la durée du premier intervalle de temps de manière à ce que les première et seconde tâches se déclenchent sensiblement en même temps et soient effectuées dans un intervalle de temps sensiblement égal.

4. Procédé selon l'une quelconque des revendications 1 à 3, **caractérisé en ce que** la première valeur (V1) est la somme des consommations du second ensemble (ENS1 k) d'équipements réalisant la première fonction (F1 k) pendant une durée prédéterminée et que le premier et le troisième paramétrage (P1, P3) comprend la définition d'un premier seuil (S1_{RG1}, S1_{RG2}) en fonction d'au moins un des paramètres parmi lesquels :
• une tranche horaire prédéfinie ;
• la définition d'une charge prédéfinie de production réalisée par au moins une fonction (F1k, F2k) ;
• l'énergie moyenne nécessaire à réaliser la fonction (F1k, F2k) pendant une durée prédéterminée ;
• le régime général de la fonction (RG1 k, RG2k).

5. Procédé selon l'une quelconque des revendications 1 à 4, **caractérisé en ce que** la première valeur (V1) est la consommation de l'équipement de référence (Aq), du premier ensemble (ENS1) pendant une durée prédéterminée et que le premier paramétrage (P1) comprend la définition d'un premier seuil (S1 i) en fonction d'au moins un des paramètres parmi lesquels :
• une tranche horaire prédéfinie ;
• la définition d'une charge prédéfinie de production réalisée par l'équipement de référence pendant une durée prédéterminée ;
• un régime donné de l'équipement de référence (Aq).

6. Procédé selon l'une des revendications 1 à 5, **caractérisé en ce que** le second paramétrage (P2) correspond au choix d'une valeur maximale de fonctionnement souhaitée d'un paramètre de l'équipement de contrôle (Ac), ledit équipement ayant un régime donné, parmi lesquels :
• une température mesurée en au moins un point de l'équipement ;
• une vitesse motrice mesurée en au moins un point de l'équipement ;
• la pression mesurée en au moins un point de l'équipement, ladite valeur maximale souhaitée définissant le second seuil (S2).

7. Procédé selon l'une quelconque des revendications 1 à 6, **caractérisé en ce que** l'équipement de régulation (Ar) est l'équipement de contrôle (Ac).

8. Procédé selon l'une quelconque des revendications 1 à 6, **caractérisé en ce que** l'équipement de régulation (Ar) est l'équipement de référence (Aq).

9. Procédé selon l'une quelconque des revendications 1 à 8, **caractérisé en ce que** l'équipement de contrôle (Ac) est l'équipement de référence (Aq).

10. Procédé selon l'une quelconque des revendications 1 à 9, **caractérisé en ce que** la valeur d'une donnée booléenne fournie par le concentrateur active la première condition.

11. Procédé selon l'une quelconque des revendications 3 à 9, **caractérisé en ce que** le déclenchement de la première tâche du premier équipement (Aa) déclenche la seconde tâche du second équipement (Ab).

12. Procédé selon l'une quelconque des revendications précédentes, **caractérisé en ce que** le procédé comprend une première étape de contrôle de la diminution de la consommation d'au moins un équipement par au moins deux mesures à des intervalles de temps différents à partir d'un dispositif de mesure de la consommation d'un équipement permettant de vérifier que la consommation de l'équipement diminue.

13. Procédé selon l'une quelconque des revendications 1 à 12, **caractérisé en ce que** l'ensemble des étapes du procédé est réitéré jusqu'à ce qu'une condition d'arrêt de la régulation soit validée.

14. Procédé selon la revendication 13, **caractérisé en ce qu'**une condition d'arrêt de la régulation est comprise dans l'ensemble des conditions suivantes :
• le dépassement d'un premier indicateur temporel indiquant une durée prédéterminée ;
• le dépassement d'un second indicateur temporel indiquant une heure prédéterminée;
• la consommation de l'équipement de référence est inférieure au troisième seuil (S1i)
• la consommation de l'ensemble des équipements réalisant une fonction (F1 k, F2k) est inférieure au premier seuil (S1, S3)
• la valeur du premier paramètre n'est pas au-delà du second seuil (S2) générant un fonctionnement de l'équipement hors de sa plage nominale de fonctionnement ;
• une opération manuelle d'un utilisateur.

15. Procédé selon l'une quelconque des revendications 12 ou 14, **caractérisé en ce que** le procédé comprend une seconde étape de contrôle lorsque la régulation est terminée permettant de mesurer la consommation de l'ensemble des équipements et de la comparer à une valeur référence correspondant au premier régime général.

16. Procédé selon l'une quelconque des revendications 13 à 14, **caractérisé en ce que** lorsque la régulation est terminée, le procédé comprend une étape de contrôle de l'augmentation de la consommation d'au moins un équipement par au moins deux mesures à des intervalles de temps différents à partir d'un dispositif de mesure de la consommation d'un équipement permettant de vérifier que la consommation de l'équipement augmente.

17. Procédé selon l'une quelconque des revendications précédentes, **caractérisé en ce que** la première fonction est réitérée pendant une première période jusqu'à l'obtention d'une charge prédéfinie, une charge unitaire étant le résultat de la réalisation d'une seule exécution de la première fonction, les étapes de régulations étant agencées de manière à inhiber le basculement de la première et la seconde fonction tant que la charge prédéfinie n'est pas obtenue.

18. Système de régulation d'un premier ensemble d'équipements , adapté à la mise en oeuvre du procédé de l'une quelconque des revendications précédentes, le système comprenant :
• une interface utilisateur permettant de définir un paramétrage de la première étape du procédé ;
• des moyens d'alimentation alimentant les équipements ;
• des moyens d'actuation des équipements permettant de réguler l'alimentation d'au moins un équipement ;
• une pluralité de capteurs, chaque capteur permettant au moins la mesure de la consommation de chaque équipement de l'ensemble et au moins un capteur permettant la mesure d'un paramètre de fonctionnement d'un équipement permettant de réaliser la seconde étape du procédé ;
• des moyens de mesure de consommation permettant de comparer au moins une valeur de consommation d'un équipement avec un premier seuil prédéfini et permettant de calculer la somme des consommations des équipements, les moyens de mesure de consommation permettant de comparer des niveaux de consommations et de paramètres nominaux de manière à déclencher au moins une condition permettant d'engager la quatrième étape de régulation des équipements comprenant une combinaison d'actions.

## Patentansprüche

1. Regulierungsverfahren des Energieverbrauchs einer ersten Gruppe (ENS1) von Ausrüstungen (Ai), wobei die erste Gruppe von Ausrüstungen (ENS1) eine zweite Gruppe (ENS1 k) einer Vielzahl (k) von Ausrüstungen umfasst, die wenigstens eine erste Funktion (F1 k) realisieren, **dadurch gekennzeichnet, dass** sie umfasst:
• eine erste Definitionsstufe von nominalen Funktionsparametern einer Ausrüstungsvielzahl (Ai)iε[1, N] ausgehend von einer Verwaltungsschnittstelle, wobei die nominalen Parameter umfassen:
i. die Definition von wenigstens einem ersten Schwellenwert (S1_{RG1}, S1 i) des Verbrauchs, dessen Wert einer vorbestimmten Parametrierung (P1, P1 i) entspricht;
ii. die Wahl wenigstens einer Ausrüstung, die als Kontrollausrüstung (Ac) betrachtet wird, und die Wahl wenigstens einer Ausrüstung, die als Regulierungsausrüstung (Ar), aus der ersten Gruppe (ENS1) betrachtet wird;
iii. die Definition wenigstens eines ersten allgemeinen Betriebs (RG1k) der zweiten Gruppe von Ausrüstungen (ENS1 k), die die erste Funktion (F1 k) realisiert, wobei der erste allgemeine Betrieb (RG1 k) einer Konfiguration eines Betriebs jeder Ausrüstung (Ai) entspricht);
iv. die Definition wenigstens eines zweiten Schwellenwertes (S2), dessen Wert einer zweiten Parametrierung (P2) entspricht, die von dem Betrieb der Kontrollausrüstung (Ac) abhängt
v. die Definition eines nominalen Bereichs für jeden Betrieb jeder Ausrüstung (Ai)iε[1, N] der ersten Gruppe;
• eine zweite Messstufe zu vorbestimmten Zeitpunkten ausgehend von Messmitteln des Verbrauchs, an den jede Ausrüstung angeschlossen ist:
i. des Verbrauchs (Eq) wenigstens einer Ausrüstung (Aq), bezeichnet als Referenzausrüstung, der ersten Gruppe (ENS1); und;
ii. des Wertes eines ersten Parameters (Prj, Tj, Vj) der Funktion der Kontrollausrüstung (Ac) der ersten Gruppe (ENS1);
• eine dritte Bearbeitungsstufe, die mittels eines Rechners realisiert ist, der die Validierung einer ersten Bedingung umfasst, die der Detektion entspricht:
i. eines ersten Wertes (V1) des Verbrauchs wenigstens einer Referenzausrüstung (Aq), die den ersten Schwellenwert (S1, S1 i) überschreitet; und
ii. einen Wert des ersten Parameters (P1, T1, V1) des Betriebs wenigstens einer Kontrollausrüstung (Ac), die den zweiten Schwellenwert (S2) nicht überschreitet, wobei die Kontrollausrüstung somit in ihrem nominalen Betriebsbereich bleibt:
• eine vierte Anfangsstufe einer Regulierung, ausgehend von einem Konzentrator und von Betätigungsmitteln, wenn die erste Bedingung validiert ist, umfassend eine Kombination der folgenden Aktionen:
i. eine Aktivierung eines Abnahmesollwertes der Versorgung der Regulierungsausrüstung (Ar);
ii. ein Umschalten der Gruppe (ENS1 k) der Ausrüstungen (Ai) in einen zweiten allgemeinen Betrieb (RG2k), der die Realisierung einer zweiten Funktion (F2k) zulässt, wobei ein dritter Schwellenwert (S3i, S1_{RG2}) des Verbrauchs wenigstens einer Referenzausrüstung, deren Wert einer dritten Parametrierung (P3) entspricht, von der zweiten Funktion (F2k) abhängt, wobei der dritte Schwellenwert (S1_{RG2}) niedriger ist als der erste Schwellenwert (S2_{RG1}).

2. Verfahren gemäß Anspruch 1, **dadurch gekennzeichnet, dass** die Messmittel des Verbrauchs den Konzentrator und eine Vielzahl von Sensoren umfassen, wobei jeder Sensor an eine Ausrüstung angeschlossen ist.

3. Regulierungsverfahren gemäß irgendeinem der Ansprüche 1 bis 2, **dadurch gekennzeichnet, dass** die erste Gruppe wenigstens eine erste Ausrüstung (Aa), die wenigstens eine erste Aufgabe in einem ersten Zeitintervall realisiert, und wenigstens eine zweite Ausrüstung (Ab), die eine zweite Aufgabe in einem zweiten Zeitintervall realisiert, umfasst, wobei die Kombination der Aktionen der vierten Anfangsstufe einer Regulierung darüber hinaus eine Anpassung der Dauer des zweiten Zeitintervalls an die Dauer des ersten Zeitintervalls derart umfasst oder nicht umfasst, dass die erste und zweite Aufgabe deutlich gleichzeitig ausgelöst werden und in einem deutlich gleichen Zeitintervall ausgeführt werden.

4. Verfahren gemäß irgendeinem der Ansprüche 1 bis 3, **dadurch gekennzeichnet, dass** der erste Wert (V1) die Summe der Verbräuche der zweiten Gruppe (ENS1 k) von Ausrüstungen ist, die die erste Funktion (F1 k) während einer vorbestimmten Dauer realisieren und dass die erste und dritte Parametrierung (P1, P3) die Definition eines ersten Schwellenwertes (S1_{RG1}, S1_{RG2}) in Abhängigkeit von wenigstens einem der Parameter umfasst, darunter:
• ein vorbestimmtes Zeitfenster;
• die Definition einer vorbestimmten Last der Produktion, die durch wenigstens eine Funktion (F1 k; F2k) realisiert ist;
• die durchschnittliche Energie, die für die Realisierung der Funktion (F1 k, F2k) während einer vorbestimmten Dauer notwendig ist;
• der allgemeine Betrieb der Funktion (RG1 k, RG2k).

5. Verfahren gemäß irgendeinem der Ansprüche 1 bis 4, **dadurch gekennzeichnet, dass** der erste Wert (V1) der Verbrauch der Referenzausrüstung (Aq), der ersten Gruppe (ENS1) während einer vorbestimmten Dauer ist und dass die erste Parametrierung (P1) die Definition eines ersten Schwellenwertes (S1 i) in Abhängigkeit von wenigstens einem der Parameter umfasst, darunter:
• ein vorbestimmtes Zeitfenster;
• die Definition einer vorbestimmten Last zur Produktion, die von der Referenzausrüstung während einer vorbestimmten Dauer realisiert wird;
• ein bestimmter Betrieb der Referenzausrüstung (Aq).

6. Verfahren gemäß einem der Ansprüche 1 bis 5, **dadurch gekennzeichnet, dass** die zweite Parametrierung (P2) der Wahl eines maximalen Wertes der gewünschten Funktion eines Parameters der Kontrollausrüstung (Aq) entspricht, wobei die genannte Ausrüstung einen bestimmten Betrieb hat, darunter:
• eine Temperatur, die an wenigstens einem Punkt der Ausrüstung gemessen wird;
• eine Triebgeschwindigkeit, die an wenigstens einem Punkt der Ausrüstung gemessen wird;
• der Wert, der an wenigstens einem Punkt der Ausrüstung gemessen wird, wobei der genannte gewünschte maximale Wert den zweiten Schwellenwert (S2) definiert.

7. Verfahren gemäß irgendeinem der Ansprüche 1 bis 6, **dadurch gekennzeichnet, dass** die Regulierungsausrüstung (Ar) die Kontrollausrüstung (Ac) ist.

8. Verfahren gemäß irgendeinem der Ansprüche 1 bi 6, **dadurch gekennzeichnet, dass** die Regulierungsausrüstung (Ar) die Referenzausrüstung (Aq) ist.

9. Verfahren gemäß irgendeinem der Ansprüche 1 bis 8, **dadurch gekennzeichnet, dass** die Kontrollausrüstung (Ac) die Referenzausrüstung (Aq) ist.

10. Verfahren gemäß irgendeinem der Ansprüche 1 bis 9, **dadurch gekennzeichnet, dass** der Wert eines boleeischen Wertes, der vom Konzentrator geliefert wird, die erste Bedingung aktiviert.

11. Verfahren gemäß irgendeinem der Ansprüche 3 bis 9, **dadurch gekennzeichnet, dass** das Auslösen der ersten Aufgabe der ersten Ausrüstung (Aa) die zweite Aufgabe der zweiten Ausrüstung (Ab) auslöst.

12. Verfahren gemäß irgendeinem der voranstehenden Ansprüche, **dadurch gekennzeichnet, dass** das Verfahren eine erste Kontrollstufe der Abnahme des Verbrauchs wenigstens einer Ausrüstung durch wenigstens zwei Messungen in unterschiedlichen Zeitintervallen ausgehend von einer Messvorrichtung des Verbrauchs einer Ausrüstung umfasst, die die Überprüfung zulässt, dass der Verbrauch der Ausrüstung abnimmt.

13. Verfahren gemäß irgendeinem der Ansprüche 1 bis 12, **dadurch gekennzeichnet, dass** alle Stufen des Verfahrens wiederholt werden, bis eine Abschaltbedingung der Regulierung validiert wird.

14. Verfahren gemäß Anspruch 13, **dadurch gekennzeichnet, dass** eine Abschaltbedingung der Regulierung in allen nachfolgenden Bedingungen inbegriffen ist:
• die Überschreitung eines ersten zeitlichen Indikators, der eine vorbestimmte Dauer anzeigt;
• die Überschreitung eines zweiten zeitlichen Indikators, der eine vorbestimmte Uhrzeit anzeigt;
• der Verbrauch der Referenzausrüstung ist geringer als der dritte Schwellenwert (S1 i)
• der Verbrauch aller Ausrüstungen, die eine Funktion (F1 k, F2k) realisieren, ist geringer als der erste Schwellenwert (S1, S3)
• der Wert des ersten Parameters überschreitet nicht den zweiten Schwellenwert (S2), der einen Betrieb der Ausrüstung außerhalb des nominalen Funktionsbereichs generiert;
• eine manuelle Operation eines Benutzers.

15. Verfahren gemäß irgendeinem der Ansprüche 12 oder 14, **dadurch gekennzeichnet, dass** das Verfahren eine zweite Kontrollstufe umfasst, wenn die Regulierung beendet ist und die Messung des Verbrauchs aller Ausrüstungen und den Vergleich mit einem Referenzwert zulässt, der dem ersten allgemeinen Betrieb entspricht.

16. Verfahren gemäß irgendeinem der Ansprüche 13 bis 14, **dadurch gekennzeichnet, dass**, wenn die Regulierung beendet ist, das Verfahren eine Kontrollstufe der Erhöhung des Verbrauchs wenigstens einer Ausrüstung durch wenigstens zwei Messungen zu unterschiedlichen Zeitintervallen ausgehend von einer Messvorrichtung des Verbrauchs einer Ausrüstung umfasst, die die Überprüfung zulässt, dass der Verbrauch der Ausrüstung steigt.

17. Verfahren gemäß irgendeinem der voranstehenden Ansprüche, **dadurch gekennzeichnet, dass** die erste Funktion während einer ersten Periode bis zum Erhalt einer vorbestimmten Last wiederholt wird, wobei eine Einheitslast das Ergebnis der Realisierung einer einzigen Ausführung der ersten Funktion ist, wobei die Regulierungsstufen derart angeordnet sind, dass sie das Umschalten der ersten und der zweiten Funktion verhindern, solange die vorbestimmte Last nicht erhalten wird.

18. Regulierungssystem einer ersten Gruppe von Ausrüstungen, die für die Umsetzung des Verfahrens gemäß irgendeinem der voranstehenden Ansprüche geeignet sind, wobei das System umfasst:
• eine Benutzerschnittstelle, die die Definition einer Parametrierung der ersten Stufe des Verfahrens zulässt;
• Versorgungsmittel, die die Ausrüstungen versorgen;
• Betätigungsmittel der Ausrüstungen, die die Regulierung der Versorgung wenigstens einer Ausrüstung zulassen,
• eine Vielzahl von Sensoren, wobei jeder Sensor wenigstens die Messung des Verbrauchs jeder Ausrüstung der Gruppe zulässt und wenigstens ein Sensor die Messung eines Betriebsparameters einer Ausrüstung zulässt, die die Realisierung der zweiten Stufe des Verfahrens zulässt;
• Messmittel des Verbrauchs, die den Vergleich von wenigstens einem Verbrauchswert einer Ausrüstung mit einem ersten vorbestimmten Schwellenwert zulasse und die Berechnung der Summe der Verbräuche der Ausrüstungen zulassen, wobei die Messmittel des Verbrauchs den Vergleich der Verbrauchsniveaus und nominaler Parameter derart zulassen, dass wenigstens eine Bedingung ausgelöst wird, die den Beginn der vierten Regulierungsstufe der Ausrüstungen zulässt, die eine Kombination von Aktionen umfassen.

## Claims

1. A method for controlling the energy consumption of a first set (ENS1) of facilities (Ai), the first set of facilities (ENS1) comprising a second set (ENS1 k) of a plurality (k) of facilities carrying out at least one first function (F1 k), **characterised in that** it comprises:
• a first step of defining nominal operating parameters of a plurality of facilities (Ai)_{iε[1, N]} from a management interface, the nominal parameters comprising:
i. defining at least one first consumption threshold (S1_{RG1}, S1 i) the value of which corresponds to a predefined parametering (P1, P1 i);
ii. choosing at least one facility considered as a monitoring facility (Ac) and choosing at least one facility considered as a control facility (Ar) from the first set (ENS1);
iii. defining at least one first general regime (RG1k) of the second set of facilities (ENS1 k) carrying out the first function (F1 k), the first general regime (RG1 k) corresponding to a configuration of a regime of each of the facilities (Ai);
iv. defining at least one second threshold (S2) the value of which corresponds to a second parametering (P2) depending on the regime of the monitoring facility (Ac);
v. defining a nominal range for each regime of each facility (Ai)_{iε[1, N]} of the first set;
• a second step of measuring at predefined instants from the consumption measuring means to which each facility is connected:
i. the consumption (Eq) of at least one facility (Aq), called a reference facility, of the first set (ENS1); and
ii. the value of a first operating parameter (Prj, Tj, Vj) of the monitoring facility (Ac) of the first set (ENS1);
• a third step of processing made by means of a calculator comprising validating a first condition corresponding to the detection:
i. of a first value (V1) of the consumption of at least one reference facility (Aq) crossing the first threshold (S1, S1i); and
ii. of a value of the first operating parameter (P1, T1, V1) of at least one monitoring facility (Ac) not exceeding the second threshold (S2), the monitoring facility thus remaining in its nominal operating range;
• a fourth step of initiating a control from a concentrator and actuation means, when the first condition is validated, comprising a combination of the following actions:
i. activating a set point for decreasing the power supply to the control facility (Ar);
ii. switching the set (ENS1k) of the facilities (Ai) to a second general regime (RG2k) enabling a second function (F2k) to be made, a third consumption threshold (S3i, S1_{RG2}) of at least one reference facility the value of which corresponds to a third parametering (P3) depending on the second function (F2k), the third threshold (S1_{RG2}) being lower than the first threshold (S1_{RG1}).

2. The method according to claim 1, **characterised in that** the consumption measuring means comprise the concentrator and a plurality of sensors, each sensor being connected to a facility.

3. The control method according to any of claims 1 to 2, **characterised in that** the first set comprises at least one first facility (Aa) making at least one first task in a first time interval and at least one second facility (Ab) making a second task in a second time interval, the combination of the actions of the fourth step of initiating a control further comprising adjusting or not the amount of time of the second time interval to the amount of time of the first time interval such that the first and second tasks are triggered substantially simultaneously and are made in a substantially equal time interval.

4. The method according to any of claims 1 to 3, **characterised in that** the first value (V1) is the sum of the consumptions of the second set (ENS1k) of facilities making the first function (F1 k) during a predetermined amount of time and **in that** the first and the third parametering (P1, P3) comprise defining a first threshold (S1_{RG1}, S1_{RG2}) as a function of at least one of the parameters from which:
• a predefined time slot;
• the definition of a predefined production load made by at least one function (F1 k, F2k);
• the mean energy necessary to make the function (F1 k, F2k) for a predetermined amount of time;
• the general regime of the function (RG1 k, RG2k).

5. The method according to any of claims 1 to 4, **characterised in that** the first value (V1) is the consumption of the reference facility (Aq), of the first set (ENS1) during a predetermined amount of time and **in that** the first parametering (P1) comprises defining a first threshold (S1i) as a function of at least one of the parameters from which:
• a predefined time slot;
• the definition of a predefined production load made by the reference facility for a predetermined amount of time;
• a given regime of the reference facility (Aq).

6. The method according to one of claims 1 to 5, **characterised in that** the second parametering (P2) corresponds to the choice of a desired maximum operating value of a parameter of the monitoring facility (Ac), said facility having a given regime, from which:
• a temperature measured in at least one point of the facility;
• a driving velocity measured in at least one point of the facility;
• the pressure measured in at least one point of the facility, said desired maximum value defining the second threshold (S2).

7. The method according to any of claims 1 to 6, **characterised in that** the control facility (Ar) is the monitoring facility (Ac).

8. The method according to any of claims 1 to 6, **characterised in that** the control facility (Ar) is the reference facility (Aq).

9. The method according to any of claims 1 to 8, **characterised in that** the monitoring facility (Ac) is the reference facility (Aq).

10. The method according to any of claims 1 to 9, **characterised in that** the value of a Boolean datum provided by the concentrator activates the first condition.

11. The method according to any of claims 3 to 9, **characterised in that** the triggering of the first task of the first facility (Aa) triggers the second task of the second facility (Ab).

12. The method according to any of the preceding claims, **characterised in that** the method comprises a first step of monitoring the decrease in the consumption of at least one facility by at least two measurements at two different time intervals from a device for measuring the consumption of a facility for checking that the consumption of the facility decreases.

13. The method according to any of claims 1 to 12, **characterised in that** the set of steps of the method is reiterated until a control stopping condition is validated.

14. The method according to claim 13, **characterised in that** a control stopping condition is included in the set of the following conditions:
• exceeding a first time indicator indicating a predetermined amount of time;
• exceeding a second time indicator indicating a predetermined time;
• the consumption of the reference facility is lower than the third threshold (S1i);
• the consumption of the set of facilities making a function (F1 k, F2k) is lower than the first threshold (S1, S3);
• the value of the first parameter is not beyond the second threshold (S2) generating an operation of the facility outside its nominal operating range;
• a manual operation of a user.

15. The method according to any of claims 12 or 14, **characterised in that** the method comprises a second monitoring step when the control is ended enabling the consumption of the set of facilities to be measured and compared to a reference value corresponding to the first general regime.

16. The method according to any of claims 13 to 14, **characterised in that** when the control is ended, the method comprises a step of monitoring the increase in the consumption of at least one facility by at least two measurements at different time intervals from a device for measuring the consumption of a facility for checking that the consumption of the facility increases.

17. The method according to any of the preceding claims, **characterised in that** the first function is reiterated for a first period until a predefined load is obtained, a unit load being the result of making a single execution of the first function, the control steps being arranged so as to inhibit switching of the first and second functions as long as the predefined load is not obtained.

18. A system for controlling a first set of facilities, adapted to the implementation of the method of any of the preceding claims, the system comprising:
• a user interface enabling a parametering of the first step of the method to be defined;
• supply means supplying the facilities;
• means for actuating the facilities enabling the power supply to at least one equipment to be controlled;
• a plurality of sensors, each sensor at least enabling the consumption of each facility of the set to be measured and at least one sensor enabling an operating parameter of a facility for making the second step of the method to be measured;
• consumption measuring means enabling at least one consumption value of a facility to be compared with a first predefined threshold and enabling the sum of the consumptions of the facilities to be calculated, the consumption measuring means enabling consumption levels and nominal parameters to be compared so as to trigger at least one condition enabling the fourth step of controlling the facilities comprising a combination of actions to be initiated.
